# EUROPÄISCHE PATENTANMELDUNG

(11) **EP 3 841 882 A1**
(43) Veröffentlichungstag der Anmeldung: **30.06.2021**
(21) Anmeldenummer: 19219501.4
(22) Anmeldetag: 23.12.2019
(51) Int. Cl.: A21D 2/18, A21D 13/33, A21D 13/48, A23L 29/212, A23L 29/262, A23P 30/10, A47G 19/00, A47G 21/00, C08L 1/02, C08L 1/26, C08L 3/02, C08L 97/02, B65D 65/46

(54) **FORMKÖRPER AUF BASIS VON POLYSACCHARID-HALTIGEN SUBSTANZEN**

(71) Anmelder: Zehnder, Josef, 6317 Oberwil bei Zug (CH); Klantschitsch, Thorid, 6312 Steinhausen (CH)
(72) Erfinder: Zehnder, Josef, 6317 Oberwil bei Zug (CH)
(74) Vertreter: Keller Schneider Patent- und Markenanwälte AG (Bern)

(57) **Zusammenfassung**

Ein Verfahren zur Herstellung eines Formkörpers, insbesondere in Form von Lebensmittelverpackungen, Essgeschirr, Essbesteck, Kochgeschirr, Kochbesteck, Backgeschirr und/oder Backbesteck, umfasst die folgenden Schritte:
a) Herstellen einer Emulsion aus einem fetten Öl und Wasser unter Verwendung eines Emulgators;
b) Herstellen einer Backmasse durch Vermischen der Emulsion mit einer Polysaccharidhaltigen Substanz;
c) Formen der Backmasse mit einem formgebenden Werkzeug;
d) Erhitzen der Backmasse, so dass sich die Backmasse verfestigt und der Formkörper erhalten wird.

## Beschreibung

### Technisches Gebiet

Die Erfindung betrifft ein Verfahren zur Herstellung eines Formkörpers auf Basis von Polysaccharid-haltigen Substanzen. Weiter betrifft die Erfindung eine mit dem erfindungsgemässen Verfahren herstellbare Backmasse, einen Formkörper sowie die Verwendung eines Formkörpers als Lebensmittelverpackungen, Essgeschirr, Essbesteck, Kochgeschirr, Kochbesteck, Backgeschirr und/oder Backbesteck.

### Stand der Technik

Heutzutage werden die meisten Einwegverpackungen, Einwegeschirre oder Einwegbestecke aus Kunststoffen gefertigt. Aufgrund der Vielfalt der erhältlichen Kunststoffe, können die Einwegprodukte bezüglich der mechanischen Eigenschaften, der Hitzebeständigkeit oder der Dichtigkeit an nahezu alle Verwendungszwecke optimal angepasst werden.

Kunststoff-basierte Einwegprodukte stehen jedoch mehr und mehr in der Kritik, da diese einerseits eine schlechte CO₂-Bilanz aufweisen, weil Kunststoffe üblicherweise aus fossilem Rohöl hergestellt werden, und andererseits aufgrund der meist fehlenden biologischen Abbaubarkeit bei nicht fachgerechter Entsorgung schädigende Auswirkungen auf die Umwelt haben. Von gesetzgeberischer Seite wird die Verwendung von Kunststoff-basierten Einwegprodukten daher mehr und mehr eingeschränkt. Entsprechend besteht ein grosses Interesse an alternativen Lösungen, welche hinsichtlich der genannten Nachteile vorteilhafter sind als Kunststoff-basierte Produkte.

Ein Ansatz besteht darin, Einwegprodukte wie beispielsweise Kaffeebecher aus einem Cellulose-basierten Material wie Papier oder Karton zu fertigen und zur Erreichung einer ausreichenden Dichtigkeit mit einer dünnen Kunststoffbeschichtung zu versehen. Dadurch lässt sich der Anteil von Kunststoff zwar etwas reduzieren und die CO₂-Bilanz fällt besser aus. Insbesondere die Probleme bei einer nicht fachgerechten Entsorgung bleiben aber weitgehend bestehen.

Es gibt auch Ansätze, bei welchen kunststofffreie Einwegprodukte auf Basis von Waffelbackmassen hergestellt werden. Die WO 91/12186 (Franz Haas Waffelmaschinen Industriegesellschaft mbH) beschreibt beispielsweise die Herstellung von verrottbaren, dünnwandigen Formkörpern, wie beispielsweise Teller, Becher oder Verpackungen, durch Ausbacken einer Backmasse auf Stärkebasis. Dabei handelt es sich um fettfreie Backmassen, welche spezielle Fettsäuren und/oder Derivate enthalten. Bei der Herstellung werden die wasserlöslichen und pulverförmigen Komponenten der Backmasse (gegebenenfalls unter Verwendung einer trockenen Vormischung der Verdickungs- und Trennmittel) in die erforderliche Wassermenge eingerührt. Der Backvorgang erfolgt dann analog zu essbaren Waffeln.

In einer Weiterentwicklung davon wird in der WO 97/00015 (Franz Haas Waffelmaschinen Industriegesellschaft mbH) zur Erhöhung der Flexibilität, der Wasserresistenz sowie der Kompatibilität und Haftung für hydrophobe Deckschichten der Backmasse zusätzlich ein toxikologisch unbedenklicher Polyvinylalkohol zugegeben.

Die US 2011/0171352 A1 (Scott Lange) beschreibt wiederum essbare Backformen, z.B. zur Herstellung von Cupcakes. Die Backformen basieren auf pflanzlicher Stärke, z.B. Kartoffel-, Mais-, Maniok-, Hirse-, Weizen-, Tapioka-, Pfeilwurz- und Süsskartoffelstärke. Zusätzlich können Öl und Wasser sowie Aromen und Lebensmittelfarbstoffe vorliegen.

Die WO 2005/021633 A1 (Biosphere Industries Corporation) befasst sich mit wasserresistenten, bioabbaubaren Behältern, wie beispielsweise Boxen, Platten, Schüsseln und Becher. Die Behälter basieren auf Wasser, Stärke, einem Mittel zu Reduzierung der Löslichkeit bzw. Vernetzungsmittel, einem Protein oder einer natürlichen Polymerverbindung, Fasern, einer Wachsemulsion, einem Faserleimmittel, und einem Trennmittel. Die Wachsemulsion wird zur Erhöhung der Wasserresistenz eingesetzt und liegt insbesondere als stabile, wässrige Emulsion aus Paraffin oder mikrokristallinem Wachs vor, welche Harz enthalten kann. Die Wachsemulsion wird typischerweise unter Verwendung eines Emulgators durch mechanisches Rühren hergestellt.

Nachteilig bei den bekannten kunststofffreien Lösungen ist jedoch, dass diese die vorteilhaften Eigenschaften von Kunststoff-basierten Produkten meist nur beschränkt erfüllen und somit nur für ausgewählte Anwendungen einsetzbar sind.

Insbesondere für Essgeschirre, wie beispielsweise Becher oder Teller, welche für längere Zeit mit heissen Flüssigkeiten in Kontakt stehen, gibt es bislang keine befriedigende Einwegprodukte, welche an die vorteilhaften Eigenschaften von entsprechenden Kunststoff-basierten Produkten herankommen.

Es besteht daher nach wie vor ein Bedarf nach verbesserten Lösungen, welche die genannten Nachteile möglichst überwinden.

### Darstellung der Erfindung

Aufgabe der Erfindung ist es, dem eingangs genannten technischen Gebiet zugehörende und vorteilhafte Verfahren und Erzeugnisse, insbesondere Lebensmittelverpackungen, Essgeschirr, Essbesteck, Kochgeschirr, Kochbesteck, Backgeschirr und/oder Backbesteck, zu schaffen. Die mit den Verfahren herstellbaren Erzeugnisse sollen im Besonderen bezüglich der mechanischen Eigenschaften, der Hitzebeständigkeit und/oder der Dichtigkeit Vorteile aufweisen. Insbesondere sollen die Produkte geeignet sein, um für möglichst lange Zeit mit heissen Flüssigkeiten in Kontakt zu stehen, ohne dass die mechanischen Eigenschaften der Produkte dabei beeinträchtigt werden.

Die Lösung der Aufgabe ist durch die Merkmale des Anspruchs 1 sowie der weiteren unabhängigen Ansprüche definiert.

Ein erster Aspekt der Erfindung betrifft demnach Verfahren zur Herstellung eines Formkörpers, insbesondere in Form von Lebensmittelverpackungen, Essgeschirr, Essbesteck, Kochgeschirr, Kochbesteck, Backgeschirr und/oder Backbesteck, wobei das Verfahren die folgenden Schritte umfasst:
a) Herstellen einer Emulsion aus einem fetten Öl und Wasser unter Verwendung eines Emulgators;
b) Herstellen einer Backmasse durch Vermischen der Emulsion mit einer Polysaccharid-haltigen Substanz;
c) Formen der Backmasse mit einem formgebenden Werkzeug;
d) Erhitzen der Backmasse, so dass sich die Backmasse verfestigt und der Formkörper erhalten wird.

Unter dem Ausdruck "Formkörper" wird dabei ein fester Körper mit einer definierten Form verstanden. Der Formkörper kann ein Halbzeug oder Halbfabrikat sein, welches in einem oder mehreren weiteren Verfahrensschritten zu einem Fertigerzeugnis weiterverarbeitet wird. Ebenfalls möglich ist es, dass der Formkörper ein Fertigerzeugnis ist.

Der Formkörper kann im Prinzip jede beliebige Form haben. Beispielsweise kann der Formkörper in Form einer Folie, einer Platte, eines Quaders, eines Zylinders, eines Rings, eines Profils oder in Form von komplexeren Gebrauchsgegenständen vorliegen.

Die Formkörper können selbstragend und/oder formstabil sein. Es ist aber auch möglich, flexible Formkörper herzustellen.

Im Besonderen handelt es sich beim Formkörper um eine Lebensmittelverpackung, ein Essgeschirr, ein Essbesteck, ein Kochgeschirr, ein Kochbesteck, ein Backgeschirr und/oder ein Backbesteck. Besonders bevorzugt ist der Formkörper ein Teller, eine Platte, ein Gefäss für Flüssigkeiten, eine Schale, ein Topf, ein Trinkbehälter, ein Becher, eine Tasse, eine Flasche, eine Kanne, ein Trinkhalm, ein Deckel für ein Essgeschirr, eine Gabel, ein Messer ein Löffel, ein Backform, ein Tortenheber, eine Kelle, ein Schaber, eine Aufbewahrungsbox für Lebensmittel, eine Lebensmittelverpackung und/oder ein Gefrierbehälter. Ganz spezielle bevorzugt handelt es sich um einen Trinkbehälter für heisse Getränke, bevorzugt für Kaffee und/oder Tee, wie beispielsweise einen Kaffeebecher oder eine Kaffeetasse.

Mit "fetten Ölen" sind vorliegend Öle auf Basis von Estern des Glycerins mit Fettsäuren gemeint. Dabei handelt es sich insbesondere um Triglyceride, wobei geringe Mengen an Diglyceriden und Monoglyceriden vorliegen können. Bevorzugt handelt es sich um pflanzliche Öle, welche frei von Cholesterin sind.

Überraschenderweise wurde gefunden, dass sich Formkörper, welche nach dem erfindungsgemässen Verfahren hergestellt wurden, sowohl kalte als auch warme Flüssigkeiten und/oder Speisen für lange Zeit, im Speziellen bis zu 96 Stunden oder noch länger, halten können, ohne dass die Formkörper dabei undicht würden, die mechanischen Eigenschaften nennenswert beeinträchtigt würden oder die Flüssigkeiten oder Speisen einen unerwünschten Beigeschmack annehmen würden.

Die Formkörper haben sich zudem als langfristig lagerstabil erwiesen. So können Formkörper hergestellt werden, welche eine Haltbarkeit von bis zu 2 oder mehr Jahren aufweisen.

In mechanischer Hinsicht sind die herstellbaren Formkörper sehr stabil. Fallen diese aus Höhen von ca. 1 - 2 Metern auf den Boden, bleiben Sie üblicherweise intakt.

Durch die intrinsische Wasserdichtigkeit der verbackenen Backmasse können langzeitig wasserdicht Formkörper hergestellt werden, ohne dass dabei Beschichtungen aus Kunststoff, Wachs oder Silikon notwendig wären. Dennoch eignen sich die Oberflächen der Formkörper bei Bedarf zum Aufbringen von Beschichtungen aller Art, beispielsweise von Kunststoffbeschichtungen.

Ohne an die Theorie gebunden zu sein wird davon ausgegangen, dass die vorteilhaften Eigenschaften, insbesondere die langfristige Dichtigkeit und Stabilität bei hohen Temperaturen, durch die relativ hohen Dichten der mit dem erfindungsgemässen Verfahren herstellbaren Formkörper zu Stande kommt. Durch das erfindungsgemässe Verfahren werden die einzelnen Komponenten, insbesondere die Polysaccharid-haltigen Substanzen, im Formkörper vernetzt und verdichtet, was das Eindringen von Flüssigkeiten in die Formkörper stark verlangsamt.

Weiter können Formkörper mit glatten Oberflächen hergestellt werden, ohne dass hierfür zusätzliche Beschichtung erforderlich wären. Dies verbessert den optischen als auch den haptischen Eindruck der Formkörper signifikant.

Trotz der Dichtigkeit und mechanischen Stabilität lassen sich Formkörper herstellen, welche durch Kompostierung unter normalen Umgebungsbedingungen in Anwesenheit von Feuchtigkeit innerhalb von ungefähr einer Woche vollständig zersetzt werden. Es bedarf daher keiner industriellen Kompostierung bei welcher typischerweise hohe Temperaturen oder Enzyme eingesetzt werden. Gelangen solche Formkörper durch Unachtsamkeit in die Umwelt, z.B. auf ein Feld, ein Waldstück oder in ein Gewässer, zersetzten sich die Formkörper je nach Umgebungsbedingungen innerhalb von ca. 2 - 3 Wochen. Für die meisten Tiere sind die Formkörper als solche sowie deren Zersetzungsprodukte unbedenklich. Sollten also während dem Zersetzungsprozess Tiere von den Formkörpern fressen, ist dies meist unproblematisch.

Des Weiteren lässt sich das erfindungsgemässe Verfahren mit Lebensmittelrohstoffen, durchführen, so dass essbare Formkörper in Lebensmittelqualität hergestellt werden können. Durch die Wahl entsprechender Rohstoffe können dabei Formkörper hergestellt werde, welche die Kriterien von vegetarischen Lebensmitteln, von veganen Lebensmitteln, von koscheren Lebensmitteln, von Halal-Lebensmitteln und/oder von Bio-Labels erfüllen. Auch möglich ist die Herstellung von glutenfreien Formkörpern oder von Formkörpern, welche frei sind von gentechnisch veränderten Organismen (non-GMO) sind.

Besonders eignet sich das erfindungsgemässe Verfahren daher zur Herstellung von Essgeschirr, Essbesteck, Kochgeschirr, Kochbesteck, Backgeschirr und/oder Backbesteck. Dies insbesondere für flüssige und/oder heisse Lebensmittel.

Ganz speziell geeignet ist das Verfahren für die Herstellung von Trinkbehältern für heisse Getränke insbesondere Kaffeebecher, Kaffeetassen, Teetassen und/oder Teebecher. Es ist aber auch möglich, Backformen oder Gefrierbehälter herzustellen.

Polysaccharide sind Vielfachzucker, in denen mehr als zwei, typischerweise mindestens elf, Monosaccharide (Einfachzucker) über eine glycosidische Bindung verbunden sind. Eine "Polysaccharid-haltige Substanz" ist entsprechend eine Substanz enthaltend Polysaccharide und allenfalls weitere Bestandteile. Beispiele für Polysaccharide sind Glycogen, Stärke, Pektine, Chitin, Callose und Cellulose. Mit Vorteil beträgt ein Anteil an Polysaccharide in der Polysaccharid-haltigen Substanz wenigstens 25 Gew.-%, insbesondere wenigstens 50 Gew.-%.

Besonders bevorzugt ist es, wenn die Erhitzung der Backmasse in Schritt d) bei erhöhtem Druck erfolgt, insbesondere bei einem Druck von > 1 bar, im Speziellen > 1.5 bar, bevorzugt > 2 bar, weiter bevorzugt bei 5 - 30 bar, im ganz Speziellen bei 8 - 20 bar, besonders bevorzugt bei 10 - 15 bar. Der Ausdruck "erhöhter Druck" meint dabei im Vergleich mit den Umgebungsbedingungen höherer Druck.

Gemäss einer vorteilhaften Ausführungsform wird die Backmasse in Schritt c) in eine Form eingebracht und anschliessend in Schritt d) erhitzt, wobei die Form bevorzugt luftdicht verschliessbar ist und im Besonderen während Schritt d) luftdicht verschlossen ist. Dadurch lässt sich der Backvorgang bei erhöhtem Druck durchführen.

Durch eine Erhöhung des Drucks während des Backvorgangs lässt sich im Besonderen die Dichtigkeit und Dichte der hergestellten Formkörper steigern.

Es ist aber grundsätzlich gemäss einer anderen Ausführungsform möglich, als formgebendes Werkzeug einen Extruder zu verwenden, insbesondere ein Extruder mit einer Heizvorrichtung im Bereich des Auslasses.

Das formgebende Werkzeug kann auch in Form einer Vorrichtung zur additiven Fertigung vorliegen.

Ebenso kann die Backmasse bei Normaldruck oder bei Unterdruck geformt werden.

Bevorzugt wird die die Backmasse in Schritt d) auf eine Temperatur von 120 - 280°C, bevorzugt 140 - 250°C, besonders bevorzugt 160 - 180°C, erhitzt.

Im Besonderen wird die Backmasse in Schritt d) während 1 - 30 Minuten, bevorzugt während 2 - 20 Minuten, im Speziellen während 3 - 15 Minuten erhitzt wird. Dabei werden bevorzugt die vorstehend genannten Temperaturen eingehalten werden.

Diese Bedingungen haben sich für das erfindungsgemässe Verfahren und die Produkteigenschaften der resultierenden Formkörper als besonders geeignet herausgestellt.

Je nach herzustellendem Formkörper können aber auch andere Bedingungen in Schritt d) vorteilhaft sein.

In Schritt a) wird eine Emulsion aus einem pflanzlichen Öl und Wasser gebildet. Dabei ist es von entscheidendem Vorteil, pflanzliches Öl einzusetzen. Wird stattdessen beispielsweise ein pflanzliches Wachs verwendet, können die erfindungsgemässen Vorteile nicht im gewünschten Masse zum Tragen kommen. Im Besonderen wird weder eine vergleichbare Dichtigkeit erreicht, noch können die hergestellten Formkörper über längere Zeit hohen Temperaturen widerstehen, wie dies beispielsweise bei Kaffee- oder Teebechern erforderlich ist. Ohne an eine Theorie gebunden zu sein, wird davon ausgegangen, dass die festen Wachspartikel in der Emulsion relativ grosse Partikel bilden, welche sich auch bei starkem mechanischen Rühren in der Emulsion und entsprechend auch in der Backmasse weniger homogen verteilen lassen als Öle. Aufgrund der Tatsache, dass Wachse bei Raumtemperatur fest sind und der Schmelzpunkt von Wachsen typischerweise über 40°C liegt, dürfte das in der Emulsion vorhandene Wachs sowohl während des Backvorgangs in Schritt d) als auch bei der Verwendung des Formkörpers zur Aufnahme von heissen Lebensmitteln, z.B. bei Kaffeebechern oder Tellern, Phasenübergänge von fest nach flüssig und umgekehrt vollziehen. Es kann davon ausgegangen werden, dass dies die Stabilität und Dichtigkeit des Formkörpers stark beeinträchtigt.

In Schritt a) wird bevorzugt eine Emulsion hergestellt, welche, bezogen auf das Gesamtgewicht der Emulsion, 4 - 55 Gew.-% Öl, 40 - 94 Gew.-% Wasser und 2 - 6 Gew.-% Emulgator enthält oder daraus besteht.

Besonders bevorzugt wird in Schritt a) eine Emulsion hergestellt, welche frei von Wachs ist. Dies bedeutet, dass ein Gewichtsanteil an Wachs in der Emulsion, bezogen auf das Gesamtgewicht der Emulsion kleiner als 1 Gew.-%, bevorzugt kleiner als 0.5 Gew.-%, weiter bevorzugt kleiner als 0.1 Gew.-% ist. Besonders bevorzugt ist die Emulsion vollständig frei von Wachs.

Weiter ist es bevorzugt, wenn die in Schritt b) hergestellte Backmasse frei von Wachs ist. Dies bedeutet, dass ein Gewichtsanteil an Wachs in der Backmasse, bezogen auf das Gesamtgewicht der Backmasse kleiner als 1 Gew.-%, bevorzugt kleiner als 0.5 Gew.-%, weiter bevorzugt kleiner als 0.1 Gew.-% ist. Besonders bevorzugt ist die Backmasse vollständig frei von Wachs.

Bevorzugt wird in Schritt a) eine Öl-in-Wasser-Emulsion hergestellt, in welcher das pflanzliche Öl als disperse Phase in Wasser als kontinuierlicher Phase vorliegt.

Bei der Herstellung der Emulsion in Schritt a) wird das das pflanzliche Öl, das Wasser und der Emulgator bevorzugt unter Einwirkung von Scherkräften gerührt. Dabei sind bevorzugt möglichst hohe Scherkräfte zu wählen, welche derart ausgelegt sind, dass eine möglichst feine disperse Phase in der kontinuierlichen Phase entsteht.

Ohne an die Theorie gebunden zu sein wird davon ausgegangen, dass damit das pflanzliche Öl in Schritt b) besonders homogen in der Backmasse verteilt werden kann, was der Dichtigkeit des Formkörpers zu Gute kommt.

Bevorzugt wird in Schritt a) das das pflanzliche Öl, das Wasser und der Emulgator derart gerührt, dass der mittlere Teilchendurchmesser (Dₘ) der dispersen Phase kleiner als 1 Mikrometer, bevorzugt kleiner als 0.5 Mikrometer, ist.

Weiter ist es bevorzugt, wenn zum Rühren ein mechanischer Rührer eingesetzt wird, bevorzugt ein radial fördernder Rührer, im Besonderen ein Scheibenrührer. Ein Scheibenrührer verfügt typischerweise über eine um das Zentrum rotierbare Kreisscheibe, welche mehrere, z.B. 6, von der Kreisscheibe wegragende und senkrecht zur Kreisscheibe stehende Rührblätter aufweist. Mit mechanischen Rührern lassen sich in effizienter Art und Weise hohe Scherkräfte erzeugen.

Grundsätzlich können aber auch andere Rührsysteme eingesetzt werden.

Gemäss einer bevorzugten Ausführungsform wird bei der erfindungsgemässen Herstellung der Formkörper aber keine Glukose eingesetzt. Damit kann die Stabilität gegenüber raschen Temperaturschwankungen und hohen Temperaturen verbessert werden.

Die Komponenten werden im Besonderen derart miteinander verbacken, dass der in Schritt c) erhältliche Formkörper eine Dichte von > 1.0 g/cm³, bevorzugt ≥ 1.1 g/cm³, im Besonderen ≥ 1.2 cm³, aufweist. Gemäss einer ganz besonders bevorzugten Ausführungsform wird das Verfahren so geführt, dass der in Schritt c) erhältliche Formkörper eine Dichte von ≥ 1.33 aufweist.

Ganz besonders bevorzugt werden die Komponenten derart miteinander verbacken, dass der in Schritt c) erhältliche Formkörper eine Dichte von 1.1 - 2.0 g/cm³, bevorzugt 1.2 - 1.5 g/cm³, im Besonderen 1.25 - 1.40 cm³, im Speziellen 1.33 - 1.38 g/cm³, aufweist.

Die Dichte wird im vorliegenden Zusammenhang mit Vorteil durch Gaspyknometrie mit Helium als Gas bestimmt. Bei der Gaspyknometrie wird zur Dichtebestimmung die Menge des gasförmigen Mediums (Helium) bestimmt, die vom Formkörper (hier der in Schritt c) erhältliche Formkörper) verdrängt wird. Die Messung erfolgt bei Standardbedingungen (T=25°C; p=1.013 bar). Hierfür kann z.B. He-Pyknometer vom Typ AccuPyc 1330 der Firma Micromeritics Instrument (USA) verwendet werden.

Die erhältlichen Dichten können durch die Art der Herstellung der Emulsion, insbesondere durch die Stärke von dabei einwirkenden Scherkräften, als auch durch die verwendeten Komponenten beeinflusst werden. Es hat sich gezeigt, dass im Allgemeinen mit zunehmender Stärke der Scherkräfte die Dichte der erhältlichen Formkörper zunimmt. Ebenso kann die Dichte durch die Polysaccharid-haltige Substanz welche in Schritt c) eingesetzt wird, beeinflusst werden. Insbesondere die Verwendung von Getreidemehlen und speziell die Kombination von Mischungen aus wenigstens zwei unterschiedlichen Getreidemehlen ergeben hohe Dichten in den Formkörpern. Formkörper mit solchen Dichten zeigen die vorstehend genannten Vorteile in besonderem Masse. Speziell wird bei solchen Dichten das Eindringen von Flüssigkeiten in die Formkörper stark verlangsamt, dennoch ist eine gute Abbaubarkeit gegeben.

Die Komponenten werden in einer weiteren bevorzugten Ausführungsform derart miteinander verbacken, dass der in Schritt c) erhältliche Formkörper einen statischen Kontaktwinkel mit Wasser von ≥ 50°, bevorzugt ≥ 65°, besonders bevorzugt ≥ 70° aufweisen.

Im Speziellen liegt der statische Kontaktwinkel mit Wasser in Bereich von 50°-100°, 65°-90°, im Speziellen 70°-85°.

Mit den genannten Kontaktwinkeln wird ein optimales Benetzungsverhalten erreicht, welches mit dazu führt, dass einerseits eine hohe Dichtigkeit und zugleich eine gute Abbaubarkeit gegeben ist.

Die Bestimmung des statischen Kontaktwinkels erfolgt durch statische Kontaktwinkelmessung, welche auch bekannt ist als "Sessile Drop Method". Diese Methode ist dem Fachmann an sich bekannt. Dabei wird ein Wassertropfen auf die Oberfläche des Formkörpers aufgetropft und der Winkel zwischen Oberfläche des Formkörpers und Tropfenkontur unmittelbar nach dem Auftragen gemessen. Vorliegend erfolgt die Bestimmung des Kontaktwinkels bevorzugt 250 ms nach dem Auftragen des Tropfens aus destilliertem Wasser unter Standardbedingungen (T=25°C, p=1.013 bar) und bei einer relativen Luftfeuchtigkeit von 65%. Die Tropfengrösse beträgt bevorzugt ca. 11 µl. Die Kontaktwinkelmessung kann beispielsweise mit einem Gerät vom Typ OCA 20 der Firma DataPhysics Instruments (Deutschland) durchgeführt werden. Besonders bevorzugt werden die Komponenten derart miteinander verbacken, dass der in Schritt c) erhältliche Formkörper die vorstehend genannte Dichten als auch die vorstehend genannten Kontaktwinkel aufweisen.

Im Besonderen beträgt dabei die Dichte ≥ 1.2 cm³ und der Kontaktwinkel ≥ 60°. Weiter bevorzugt ist eine Dichte von ≥ 1.33 cm³ und ein Kontaktwinkel ≥ 70°.

Speziell vorteilhaft ist eine Dichte von 1.25 - 1.40 cm³ und ein Kontaktwinkel von ≥ 65°. Noch vorteilhafter sind eine Dichte von 1.33 - 1.38 g/cm³ und ein Kontaktwinkel ≥ 70°.

Die Polysaccharid-haltige Substanz ist bevorzugt eine partikulare Substanz, insbesondere mit einer Partikelgrösse kleiner 2 mm, insbesondere kleiner 1 mm, bevorzugt kleiner 300 µm, mehr bevorzugt kleiner 200 µm, im Besonderen kleiner 150 µm. Als Partikelgrösse wird der D90-Wert betrachtet (90 % der Partikel sind kleiner als der angegebene Wert der Partikelgrösse und 10 % der Partikel sind grösser als der angegebene Wert der Partikelgrösse).

Bevorzugt ist die Polysaccharid-haltige Substanz eine stärkehaltige und/oder cellulosehaltige Substanz. Ganz besonders bevorzugt ist eine stärkehaltige Substanz.

Falls verwendet beinhaltet die cellulosehaltige Substanz mit Vorteil partikelförmiges Papier, partikelförmiges und/oder partikelförmiges Holz. Im Besonderen handelt es sich um zerkleinertes Papier, Holzstaub und/oder gemahlenes Heu. Der Begriff "Heu" steht dabei insbesondere für die getrocknete oberirdische Biomasse von Grünlandpflanzen wie Gräsern, Kräutern und Hülsenfrüchten.

Wie bereits gesagt ist die Polysaccharid-haltige Substanz bevorzugt eine stärkehaltige Substanz. Insbesondere beinhaltet die Polysaccharid-haltige Substanz ein Getreidemehl oder sie besteht daraus. Bevorzugt handelt es ein Getreidemehl welches, bezogen auf das Gesamtgewicht des Getreidemehls, 50 - 75 Gew.-% Kohlenhydrate beinhaltet. Daneben beinhaltet das Getreidemehl bevorzugt 10 - 20 Gew.-% Wasser, 8-15 Gew.-% Proteine, 0.5 - 2.5 Gew.-% Fett und/oder 0.3-1.9 Gew.-% Mineralsalz.

Bevorzugt handelt es sich um Weizenmehl, Dinkelmehl, Roggenmehl, Reismehl, Hirsemehl, Hanfmehl, Hafermehl, Maismehl, Sonnenblumenmehl und/oder Leinsamenmehl. Besonders bevorzugt ist Getreidemehl mit einer Partikelgrösse (D90-Wert) von kleiner 300 µm, insbesondere kleiner 200 µm.

In einer speziell bevorzugten Ausführungsform beinhaltet die Polysaccharid-haltige Substanz eine Mischung aus wenigstens zwei unterschiedlichen Getreidemehlen, im Besonderen eine Mischung aus Weizenmehl, Maismehl und Leinsamenmehl.

Gemäss einer besonders vorteilhaften Ausführungsform enthält der Emulgator pflanzliche Fasern, insbesondere Bastfasern, Blattfasern und /oder Fruchtfasern, oder er besteht daraus. Besonders bevorzugt werden mehrere unterschiedliche pflanzliche Fasern kombiniert.

Besonders bevorzugt handelt es sich bei den pflanzlichen Fasern um Naturfasern, die von Pflanzen stammen und sich ohne weitere chemische Umwandlungsreaktionen direkt einsetzen lassen. Entsprechend handelt es sich bevorzugt nicht um Chemiefasern, die synthetisch hergestellt werden. In einer bevorzugten Ausführungsform enthält die Backmasse keine synthetischen Fasern.

Vorteilhaft sind z.B. pflanzliche Fasern aus Bambus, Tapioka, Reis, Citrusfrüchten, Karotten, Kürbis, Weizen, Hafer, und/oder Hanf. Besonders vorteilhaft sind Fasern aus Buchweizen, Äpfeln und/oder Orangen.

Im Besonderen handelt es sich bei den pflanzlichen Fasern um Fruchtfasern aus der Fruchthülle und/oder der Fruchtschale.

Insbesondere können die Fasern einen Durchmesser von 10 bis 50 Mikrometer und/oder Längen von 0.1 bis 10 Millimeter aufweisen.

Gemäss einer weiteren vorteilhaften Ausführungsform enthält der Emulgator Cellulose, insbesondere Methylcellulose und/oder Hydoxymethylcellulose, oder der Emulgator besteht daraus. Cellulose kann als Emulgator mit den oben beschriebenen pflanzlichen Fasern kombiniert werden.

Weiter kann es vorteilhaft sein, wenn der Emulgator ein Phospholipid, ein Sphingomyelin und/oder ein Glycolipid enthält oder daraus besteht. Besonders bevorzugt sind Phospholipid, insbesondere ein Phosphatidylcholin, bevorzugt Lecithin. Phospholipide setzen sich aus einem hydrophilen Kopf und zwei hydrophoben Kohlenwasserstoffschwänzen zusammen. Sie sind amphiphil. Technisch gewonnene Lecithin-Produkte, wie Extrakte aus Sojabohnen oder Eiern, enthalten in Abhängigkeit von ihren Quellen neben Lecithinen auch andere Phospholipide.

Phospholipide können als Emulgator mit der vorstehend genannten Cellulose und/oder den oben beschriebenen pflanzlichen Fasern kombiniert werden.

Vorzugsweise handelt es sich beim fetten Öl um ein pflanzliches Öl, besonders bevorzugt um ein Speiseöl, insbesondere um Rapsöl, Sonnenblumenöl, Sojaöl, Erdnussöl, Kokosöl und/oder Olivenöl. Damit kommen die erfindungsgemässen Vorteile am besten zur Geltung und es lassen sich in einfacher Art und Weise essbare Formkörper herstellen.

Es sind aber auch andere Öle einsetzbar. Bevorzugt ist die Emulsion, weiter bevorzugt auch die Backmasse, frei von tierischen Ölen und/oder Fetten.

Gemäss einer weiteren bevorzugten Ausführungsform wird bei der Herstellung in Schritt b) zusätzlich Glucose und/oder Saccharose beigegeben. Dadurch kann die Dichtigkeit des Formkörpers weiter gesteigert und/oder die Rauigkeit der Oberfläche weiter reduziert werden. Saccharose ist ein Disaccharid, in welchem je ein Molekül α-D-Glucose und β-D-Fructose über eine α,β-1,2-glycosidische Bindung verbunden sind. Glucose ist ein Monosaccharid mit der Summenformel C₆H₁₂O₆.

Hinsichtlich der Mengenanteile werden im erfindungsgemässen Verfahren, bezogen auf das Gesamtgewicht der Backmasse, bevorzugt die folgenden Mengenanteile eingesetzt:
- 20 - 61 Gew.-% Wasser
- 3 - 21 Gew.-% fettes Öl
- 1 - 4 Gew.-% Emulgator
- 32 - 58 Gew.-% der Polysaccharid-haltigen Substanz
- 0 - 16 Gew.-% Glucose und/oder Saccharose

Ganz besonders bevorzugt werden im erfindungsgemässen Verfahren, bezogen auf das Gesamtgewicht der Backmasse folgenden Komponenten und Mengenanteile eingesetzt:
- 20 - 37 Gew.-% Wasser
- 4 - 20 Gew.-% fettes Öl in Form von Speiseöl
- 1 - 3 Gew.-% Emulgator in Form von Cellulose und/oder pflanzlichen Fasern
- 50 - 60 Gew.-% der Polysaccharid-haltigen Substanz in Form von Getreidemehl
- 0 - 12 Gew.-% Glucose und/oder Saccharose. Ganz besonders bevorzugt beträgt der Anteil an Glucose und/oder Saccharose 0 Gew.-%.

Damit können essbare Formkörper hergestellt werden, welche im Besonderen bezüglich Dichtigkeit und Stabilität besonders vorteilhaft sind.

Ein weiterer Aspekt der vorliegenden Erfindung betrifft einen Formkörper, insbesondere eine Lebensmittelverpackung, ein Essgeschirr, ein Essbesteck, ein Kochgeschirr, ein Kochbesteck, ein Backgeschirr und/oder ein Backbesteck, wobei der Formkörper erhältlich ist oder erhalten wird durch ein Verfahren wie es vorstehend beschrieben ist.

Der Formkörper weist dabei mit Vorteil eine Dichte von > 1.0 g/cm³, bevorzugt ≥ 1.1 g/cm³, im Besonderen ≥ 1.2 cm³, aufweist. Gemäss einer ganz besonders bevorzugten Ausführungsform weist der Formkörper eine Dichte von ≥ 1.33 auf.

Gemäss einer besonders vorteilhaften Ausführungsform weist der Formkörper eine Dichte von 1.1 - 2.0 g/cm³, bevorzugt 1.2 - 1.5 g/cm³, im Besonderen 1.25 - 1.40 cm³, im Speziellen 1.33 - 1.38 g/cm³, auf.

Weiter bezieht sich die Erfindung auf einen Formkörper, insbesondere eine Lebensmittelverpackung, ein Essgeschirr, ein Essbesteck, ein Kochgeschirr, ein Kochbesteck, ein Backgeschirr und/oder ein Backbesteck, basierend auf folgenden Komponenten:
a) einer Polysaccharid-haltigen Substanz;
b) einem Emulgator;
c) ein fettes Öl;
d) und Wasser;
wobei die Komponenten derart miteinander verbacken sind, dass der Formkörper eine Dichte von > 1.0 g/cm³, bevorzugt ≥ 1.1 g/cm³, im Besonderen ≥ 1.2 cm³, aufweist. Gemäss einer ganz besonders bevorzugten Ausführungsform weist der Formkörper eine Dichte von ≥ 1.33 auf.

Ganz besonders weist der Formkörper eine Dichte von 1.1 - 2.0 g/cm³, bevorzugt 1.2 - 1.5 g/cm³, im Besonderen 1.25 - 1.40 cm³, im Speziellen 1.33 - 1.38 g/cm³, auf.

Weiter ist es bevorzugt, wenn die vorstehend beschrieben Formkörper einen statischen Kontaktwinkel mit Wasser von ≥ 50°, bevorzugt ≥ 65°, besonders bevorzugt ≥ 70° aufweisen. Im Speziellen weisen die Formkörper eine statischen Kontaktwinkel mit Wasser in Bereich von 50°-100°, 65°-90°, im Speziellen 70°-85°.

Besonders bevorzugt weist der Formkörper die vorstehend genannten Dichten als auch die vorstehend genannten Kontaktwinkel auf.

Im Besonderen beträgt dabei die Dichte ≥ 1.2 cm³ und der Kontaktwinkel ≥ 60°. Weiter bevorzugt ist eine Dichte von ≥ 1.33 cm³ und ein Kontaktwinkel ≥ 70°.

Speziell vorteilhaft ist eine Dichte von 1.25 - 1.40 cm³ und ein Kontaktwinkel von ≥ 65°. Noch vorteilafter sind eine Dichte von 1.33 - 1.38 g/cm³ und ein Kontaktwinkel ≥ 70°.

Optional kann der Formkörper auf weiteren Komponenten basieren, beispielsweise auf Glucose und/oder Saccharose.

Die einzelnen Komponenten und Anteile der Formkörper gemäss den beiden vorangehend beschriebenen Aspekten sind dabei wie vorstehend im Zusammenhang mit dem Verfahren beschrieben, definiert.

Die Formkörper sind bevorzugt frei von einer Beschichtung, insbesondere frei von einer Beschichtung auf Basis von wasserabweisenden Stoffen. Im Besondern ist der Formkörper frei von einer Beschichtung auf Basis von Kunststoff, Wachs und/oder Silikon. Noch bevorzugter ist der Formkörper frei von einer Beschichtung auf Basis von Kunststoff, Wachs und oder Silikon.

Weiter ist es bevorzugt, wenn die Formkörper frei von Wachs, Kunststoff und/oder Silikon. Dies bedeutet, dass ein Gewichtsanteil solcher Substanzen im Formkörper, bezogen auf das Gesamtgewicht des Formkörpers, kleiner als 1 Gew.-%, bevorzugt kleiner als 0.5 Gew.-%, weiter bevorzugt kleiner als 0.1 Gew.-% ist. Besonders bevorzugt ist der Formkörper vollständig frei von Wachs, Kunststoff und/oder Silikon. Weiter bevorzugt ist der Formkörper vollständig frei von Wachs, Kunststoff und oder Silikon.

Die Komponenten werden in einer weiteren bevorzugten Ausführungsform derart miteinander verbacken, dass der in Schritt c) erhältliche Formkörper einen statischen Kontaktwinkel mit Wasser von ≥ 50°, bevorzugt ≥ 65°, besonders bevorzugt ≥ 70° aufweisen.

Im Speziellen liegt der statische Kontaktwinkel mit Wasser in Bereich von 50°-100°, 65°-90°, im Speziellen 70°-85°.

In einem zusätzlichen Aspekt betrifft die Erfindung eine Backmasse, welche insbesondere erhältlich ist oder erhalten wird durch die Schritte a) - b) des vorstehend beschriebenen Verfahrens, wobei die Backmasse folgende Komponenten beinhaltet:
a) eine Polysaccharid-haltigen Substanz;
b) einen Emulgator;
c) ein fettes Öl;
d) Wasser.

Optional kann die Backmasse weitere Komponenten enthalten, beispielsweise Glucose und/oder Saccharose.

Die einzelnen Komponenten und Anteile der Backmasse sind dabei wie vorstehend im Zusammenhang mit dem erfindungsgemässen Verfahren beschrieben, definiert.

Die Backmasse liegt bevorzugt als formbare Teigmasse vor.

Des Weiteren betrifft die vorliegende Erfindung die Verwendung eines Formkörpers wie er vorstehend beschrieben ist oder wie er durch das erfindungsgemässe Verfahren erhältlich ist, als Lebensmittelverpackung, Essgeschirr, Essbesteck, Kochgeschirr, Kochbesteck, Backgeschirr und/oder Backbesteck. Insbesondere als Trinkbehälters für heisse Getränke, bevorzugt für Kaffee und/oder Tee.

Weiter bezieht sich die Erfindung auf die Verwendung einer Emulsion aus Wasser, einem Öl und einem Emulgator zur Erhöhung der Dichtigkeit und/oder der Dichte eines Formkörpers. Dabei handelt es sich insbesondere um einen Formkörper wie er vorstehend beschrieben ist. Besonders bevorzugt handelt es sich um eine Lebensmittelverpackung, ein Essgeschirr, ein Essbesteck, ein Kochgeschirr, ein Kochbesteck, ein Backgeschirr und/oder ein Backbesteck. Insbesondere handelt es sich um einen Trinkbehälter für heisse Getränke, bevorzugt für Kaffee und/oder Tee.

Aus der nachfolgenden Detailbeschreibung und der Gesamtheit der Patentansprüche ergeben sich weitere vorteilhafte Ausführungsformen und Merkmalskombinationen der Erfindung.

### Wege zur Ausführung der Erfindung

### Herstellung von Proben

Es wurden Proben auf Basis der in Tabelle 1 genannten Komponenten hergestellt.

**Tabelle 1: Verwendete Komponenten**

| **Komponente** | **Probe A** | **Probe B** | **Probe C** |
|---|---|---|---|
| Polysaccharid-haltige Substanz | Weizenmehl (53 Gew.-%) | Weizenmehl Maismehl Leinsamenmehl (Total 57 Gew.-%) | Weizenmehl Maismehl Leinsamenmehl (Total 51 Gew.-%) |
| Emulgator | Fruchtfasern (z.B. aus Citrusfrüchten) (3 Gew.-%) | Fruchtfasern (z.B. aus Citrusfrüchten) (2 Gew.-%) | - Fruchtfasern (z.B. aus Citrusfrüchten) (2 Gew.-%) |
| | | | - Methylcellulose (1 Gew.-%) |
| fettes Öl | Speiseöl (z.B. Rapsöl) (8 Gew.-%) | Speiseöl (z.B. Rapsöl) (8 Gew.-%) | Speiseöl (z.B. Rapsöl) (8 Gew.-%) |
| Glukose | - | - | Kristallzucker (4 Gew.-%) |
| Wasser | Leitungswasser (36 Gew.-%) | Leitungswasser (33 Gew.-%) | Leitungswasser (34 Gew.-%) |

In einem ersten Schritt a) wurde jeweils eine Emulsion aus Wasser, dem fetten Öl und dem jeweiligen Emulgator durch intensives mechanisches Rühren in einem Scheibenrührer hergestellt. Sodann wurde in Schritt b) eine Backmasse durch Vermischen der Emulsion mit der Polysaccharid-haltigen Substanz und ggf. mit Glukose (Probe C) hergestellt.

Die so erhaltene Backmasse wurde in eine luftdicht verschliessbare Backform gegeben und bei einer Temperatur von ca. 170°C während 8 Minuten gebacken. In der Backform herrscht dabei ein erhöhter Druck.

Erhalten wurden scheibenförmige Formkörper mit einem Durchmesser von ca. 55 mm und einer Dicke von ca. 2 mm. Die so erhaltenen Formkörper werden im Folgenden als Proben A, B und C bezeichnet.

In einem analogen Prozess wurden, basierend auf den gleichen Komponenten wie die Proben A, B und C, mehrere Trinkbecher hergestellt.

### Materialeigenschaften

Die Proben A, B und C wurden hinsichtlich Dichte und Kontaktwinkel analysiert.

Die Dichte wurde wie vorstehend in der allgemeinen Beschreibung erwähnt mit einem He-Pyknometer vom Typ AccuPyc 1330 der Firma Micromeritics Instrument unter Standardbedingungen gemessen (T=25°C; p=1.013 bar).

Zur Bestimmung des Kontaktwinkels wurde ein Gerät vom Typ OCA 20 der Firma DataPhysics Instruments (Deutschland) verwendet. Die Messungen erfolgten unter Standardbedingungen (T=25°C, p=1.013 bar) und bei einer relativen Luftfeuchtigkeit von 65%. Der statische Kontaktwinkel wurde 250 ms nach dem Auftropfen eines Wassertropfen mit einem Volumen von ca. 11 µl bestimmt.

Tabelle 2 zeigt die Ergebnisse der Messungen.

**Tabelle 2: Dichten und Kontaktwinkel**

| **Probe** | **Dichte** | **Kontaktwinkel** |
|---|---|---|
| **A** | 1.3101 ± 0.0025 g/cm³ | 71° |
| **B** | 1.3167 ± 0.0011 g/cm³ | 76° |
| **C** | 1.3479 ± 0.0016 g/cm³ | 78° |

Aus den Ergebnissen ist ersichtlich, dass sämtliche Proben eine relativ hohe Dichte von mehr als 1.3 g/cm³ aufweisen. Besonders hoch ist die Dichte der Probe C.

Ebenso verfügen alle Proben über einen Kontaktwinkel > 70°. Der höchste Kontaktwinkel wird mit Probe C erreicht.

### Anwendungstests

Zur Prüfung der Dichtigkeit wurde die wie vorstehend beschriebenen Trinkbecher mit heissem Wasser (Temperatur ca. 90°C) gefüllt und bei Standardbedingungen stehen gelassen. In regelmässigen Abständen wurde an der Aussenseite der Trinkbecher von Auge und durch Tasten geprüft, ob Flüssigkeit aus dem Trinkbecher ausgetreten ist. Zudem wurden die Becher von Hand angehoben, um zu prüfen ob diese in mechanischer Hinsicht noch ausreichend stabil sind, um verwendet zu werden.

Dabei hat sich gezeigt, dass die Trinkbecher bis 96 Stunden, vollständig dicht und in mechanischer Hinsicht ausreichend stabil waren. Anschliessend wurde der Test beendet.

In einem weiteren Test wurde analog vorgegangen, anstelle Dichtigkeit und mechanischen Stabilität jedoch sensorisch geprüft, ob im Wasser ein unerwünschter Beigeschmack festzustellen ist. Dies war bis 96 Stunden nicht der Fall.

Leere Becher haben sich bei einem Fall aus 1.5 Meter Höhe zudem als stabil erwiesen. Risse oder Brüche konnten keine festgestellt werden.

Eine Wiederholung der Versuche hat ergeben, dass die Trinkbecher auch nach einer Lagerung von mehreren Monaten im Wesentlichen die gleichen Eigenschaften aufweisen.

Zusammenfassend ist festzustellen, dass ein neues, besonders vorteilhaftes Verfahren und daraus erhältliche Formkörper geschaffen wurden. Diese ermöglichen es Lebensmittelverpackungen, Essgeschirre, Essbestecke, Kochgeschirre, Kochbestecke, Backgeschirre und/oder Backbestecke herzustellen, welche in vielerlei Hinsicht vorteilhaft sind. Besonders hervorzuheben ist die Tatsache, dass die erfindungsgemäss herstellbaren Formkörper auch ohne Beschichtungen aus Kunststoff, Wachs oder Silikon selbst gegenüber heissen Flüssigkeiten Dicht sind ohne dass anderweitig Abstriche gemacht werden müssten.

## Patentansprüche

1. Verfahren zur Herstellung eines Formkörpers, insbesondere in Form von Lebensmittelverpackungen, Essgeschirr, Essbesteck, Kochgeschirr, Kochbesteck, Backgeschirr und/oder Backbesteck, wobei das Verfahren die folgenden Schritte umfasst:
a) Herstellen einer Emulsion aus einem fetten Öl und Wasser unter Verwendung eines Emulgators;
b) Herstellen einer Backmasse durch Vermischen der Emulsion mit einer Polysaccharid-haltigen Substanz;
c) Formen der Backmasse mit einem formgebenden Werkzeug;
d) Erhitzen der Backmasse, so dass sich die Backmasse verfestigt und der Formkörper erhalten wird.

2. Verfahren nach Anspruch 1, wobei die Erhitzung der Backmasse in Schritt d) bei erhöhtem Druck erfolgt, insbesondere bei einem Druck von > 1 bar, im Speziellen > 1.5 bar, bevorzugt > 2 bar, weiter bevorzugt bei 5 - 30 bar, im ganz Speziellen bei 8 - 20 bar, besonders bevorzugt bei 10 - 15 bar.

3. Verfahren nach wenigstens einem der Ansprüche 1 - 2, wobei in bei der Herstellung der Emulsion in Schritt a) das pflanzliche Öl, das Wasser und der Emulgators unter Einwirkung von Scherkräften gerührt wird, wobei zum Rühren bevorzugt ein mechanischer Rührer eingesetzt wird, im Besonderen ein Scheibenrührer.

4. Verfahren nach wenigstens einem der Ansprüche 1 - 3, wobei die Komponenten derart miteinander verbacken werden, dass der Formkörper eine Dichte von > 1.0 g/cm³, bevorzugt ≥ 1.1 g/cm³, im Besonderen ≥ 1.2 cm³, aufweist.

5. Verfahren nach wenigstens einem der Ansprüche 1 - 4, wobei die Polysaccharid-haltige Substanz eine stärkehaltige und/oder cellulosehaltige Substanz ist, bevorzugt eine stärkehaltige Substanz.

6. Verfahren nach Anspruch 5, wobei die stärkehaltige Substanz wenigstens ein Getreidemehl beinhaltet oder daraus besteht, insbesondere Weizenmehl, Dinkelmehl, Roggenmehl, Reismehl, Hirsemehl, Hanfmehl, Hafermehl, Maismehl, Sonnenblumenmehl und/oder Leinsamenmehl.

7. Verfahren nach wenigstens einem der Ansprüche 1 - 6, wobei der Emulgator pflanzliche Fasern, insbesondere Bastfasern, Blattfasern und /oder Fruchtfasern, beinhaltet oder daraus besteht.

8. Verfahren nach wenigstens Anspruch 7, wobei die pflanzlichen Fasern aus Bambus, Tapioka, Reis, Citrusfrüchten, Karotten, Kürbis, Weizen, Hafer, und/oder Hanf stammen, im Besonderen Fasern aus Buchweizen, Äpfeln und/oder Orangen.

9. Verfahren nach wenigstens einem der Ansprüche 1 - 8, wobei der Emulgator Cellulose enthält oder daraus besteht, insbesondere Methylcellulose und/oder Hydroxymethylcellulose.

10. Verfahren nach wenigstens einem der Ansprüche 1 - 9, wobei es sich beim Öl ein Speiseöl, insbesondere um Rapsöl, Sonnenblumenöl, Sojaöl, Erdnussöl, Kokosöl und/oder Olivenöl, handelt.

11. Verfahren nach wenigstens einem der Ansprüche 1 - 10, wobei, bezogen auf das Gesamtgewicht der Backmasse, folgende Mengenanteile eingesetzt werden:
• 20 - 61 Gew.-% Wasser
• 3 - 21 Gew.-% fettes Öl
• 1 - 4 Gew.-% Emulgator
• 32 - 58 Gew.-% der Polysaccharid-haltigen Substanz
• 0 - 16 Gew.-% Glucose und/oder Saccharose

12. Backmasse, insbesondere erhältlich durch oder erhalten durch die Schritte a) - b) des Verfahrens wie es in den Ansprüchen 1 - 10 definiert ist, wobei die Backmasse folgende Komponenten beinhaltet:
a) eine Polysaccharid-haltigen Substanz;
b) einen Emulgator;
c) ein fettes Öl;
d) und Wasser.

13. Formkörper, insbesondere eine Lebensmittelverpackung, ein Essgeschirr, ein Essbesteck, ein Kochgeschirr, ein Kochbesteck, ein Backgeschirr und/oder ein Backbesteck, basierend auf folgenden Komponenten:
e) einer Polysaccharid-haltigen Substanz;
f) einem Emulgator;
g) ein fettes Öl;
h) und Wasser;
wobei die Komponenten derart miteinander verbacken sind, dass das Material eine Dichte von > 1 g/cm³, insbesondere ≥ 1.1 g/cm³, besonders bevorzugt ≥ 1.2 g/cm³ aufweist.

14. Formkörper, insbesondere eine Lebensmittelverpackung, ein Essgeschirr, ein Essbesteck, ein Kochgeschirr, ein Kochbesteck, ein Backgeschirr und/oder ein Backbesteck, wobei der Formkörper erhältlich ist oder erhalten wird durch ein Verfahren nach wenigstens einem der Ansprüche 1 - 10.

15. Formkörper nach Anspruch 13 oder 14, wobei der Formkörper einen statischen Kontaktwinkel mit Wasser von ≥ 50°, bevorzugt ≥ 65°, besonders bevorzugt ≥ 70° aufweist.

16. Verwendung eines Formkörpers nach einem der Ansprüche Anspruch 13 oder 14 als Lebensmittelverpackung, Essgeschirr, Essbesteck, Kochgeschirr, Kochbesteck, Backgeschirr und/oder Backbesteck, insbesondere als Trinkbehälter für heisse Getränke, bevorzugt für Kaffee und/oder Tee.
